# FASCICULE DE BREVET EUROPEEN

(11) **EP 2 780 401 B1**
(45) Date de publication et mention de la délivrance du brevet: **21.03.2018**
(21) Numéro de dépôt: 12806531.5
(22) Date de dépôt: 19.11.2012
(51) Int. Cl.: C08J 3/22, B29B 7/42, B29B 7/48, C09D 5/24, H01B 1/24, B29B 9/06, B29B 9/14, C09D 11/52, B29C 47/60, B82Y 30/00, C09D 7/12, H01M 4/62, H01M 4/66, H01M 10/0525

(54) **PROCEDE DE PREPARATION D'UNE COMPOSITION PATEUSE A BASE DE CHARGES CONDUCTRICES CARBONEES**
VERFAHREN ZUR HERSTELLUNG EINER PASTÖSEN ZUSAMMENSETZUNG MIT KOHLENSTOFFHALTIGEN LEITFÄHIGEN FÜLLSTOFFEN
METHOD FOR PREPARING A PASTE-LIKE COMPOSITION COMPRISING CARBON-BASED CONDUCTIVE FILLERS

(30) Priorité: 18.11.2011 FR 1160515
(43) Date de publication de la demande: 24.09.2014
(73) Titulaire: Arkema France, 92700 Colombes (FR)
(72) Inventeur: NICOLAS, Serge, F-64140 Lons (FR); KORZHENKO, Alexander, F-64000 Pau (FR); MERCERON, Amélie, F-64230 Aussevielle (FR); LECOMTE, Yvan, F-64370 Arthez de Bearn (FR)
(74) Mandataire: Bonnel, Claudine
(86) Numéro de dépôt international: PCT/FR2012/052665
(87) Numéro de publication internationale: WO 2013/072646

(56) Documents cités:
- EP-A1- 1 772 770
- WO-A1-2011/117530
- US-A1- 2007 224 106
- US-A1- 2011 171 364
- US-A1- 2011 171 371
- DATABASE INSPEC [Online] THE INSTITUTION OF ELECTRICAL ENGINEERS, STEVENAGE, GB; septembre 2002 (2002-09), WOON-SOO KIM ET AL: "Electrical properties of PVdF/PVP composite filled with carbon nanotubes prepared by floating catalyst method", XP009160504, Database accession no. 12740485 & MACROMOLECULAR RESEARCH SPRINGER NETHERLANDS NETHERLANDS, vol. 10, no. 5, 2002, pages 253-258, XP009160504, ISSN: 1598-5032, DOI: DOI:10.1007/BF03218314
- DATABASE WPI Week 199849 Thomson Scientific, London, GB; AN 1998-574093 XP002678405, -& JP 10 255844 A (SONY CORP) 25 septembre 1998 (1998-09-25)

## Description

### DONDAINE DE L'INTENTION

La présente invention concerne un procédé de préparation d'une composition pâteuse renfermant des charges conductrices carbonées, au moins un liant polymérique, au moins un solvant et au moins un dispersant polymérique distinct du liant. Elle se rapporte également à la pâte susceptible d'être ainsi obtenue, ainsi qu'à ses utilisations, notamment pour la fabrication d'électrodes de batteries Li-ion et de supercapacités.

### APRIERE-PLAN DE L'INVENTION

Une batterie Li-ion comprend au moins une électrode négative ou anode couplée à un collecteur de courant en cuivre, une électrode positive ou cathode couplée avec un collecteur de courant en aluminium, un séparateur, et un électrolyte. L'électrolyte est constitué d'un sel de lithium, généralement l'hexafluorophosphate de lithium, mélangé à on solvant, qui est un mélange de carbonates organiques, choisis pour optimiser le transport et la dissociation des ions. Une constante diélectrique élevée favorise la dissociation des ions, et donc, le nombre d'ions disponibles dans un volume donné, alors qu'une faible viscosité est favorable à la diffusion ionique qui joue un rôle essentiel, entre autres paramètres, dans les vitesses de charge et décharge du système électrochimique.

De leur côté, les électrodes comprennent généralement au moins un collecteur de courant sur lequel est déposé un matériau composite qui est constitué par : un matériau dit actif car il présente une activité électrochimique vis-à-vis du lithium, un polymère qui joue le rôle de liant et qui est généralement un copolymère du fluorure de vinylidène pour l'électrode positive et des liants à base aqueuse, de type carboxyméthycellulose ou des lastex styrène-butadiène, pour l'électrode négative, plus un additif conducteur électronique qui est généralement le noir de carbone Super P ou le noir d'acétylène, et éventuellement un tensioactif.

Lors de la charge, le lithium s'insère dans le matériau actif d'électrode négative (anode) et sa concentration est maintenue constante dans le solvant par la désintercalation d'une quantité équivalente du matériau actif de l'électrode positive (cathode). L'insertion dans l'électrode négative se traduit par une réduction du lithium et il faut donc apporter, via un circuit extérieur, les électrons à cette électrode, en provenance de l'électrode positive. A la décharge, les réactions inverses ont lieu.

Il a été mis en évidence dans de précédentes études que le fait de substituer le noir de carbone ou le noir d'acétylène par des nanotubes de carbone (NTC), ou bien d'ajouter des NTC à de tels additifs conducteurs, présente de nombreux avantages : augmentation de la conductivité électrique, meilleure intégration autour des particules de matière active, bonnes propriétés mécaniques intrinsèques, capacité à former un réseau électrique mieux connecté dans la masse de l'électrode et entre le collecteur métallique et la matière active, bon maintien de la capacité en cyclage dans le matériau composite d'électrode, etc.

L'introduction des NTC dans les formulations des matériaux constituant les électrodes présente tout de même encore quelques inconvénients qui nécessitent d'être surmontés.

Ainsi, lorsque la dispersion des NTC est réalisée directement dans les formulations liquides (surtout dans les bases de solvants organiques), on assiste à une forte viscosification de la dispersion et une faible stabilité d'une telle dispersion. Pour surmonter cet inconvénient, on a recours à des mélangeurs à billes, broyeurs et mélangeurs à fort cisaillement. Toutefois, le taux de NTC susceptibles d'être introduits dans les formulations liquides reste limité à 1-2%. Ces difficultés freinent l'utilisation pratique des NTC dans les formulations des matériaux constituant les électrodes en raison de l'agrégation des NTC due à leur structure très enchevêtrée.

En outre, d'un point de vue toxicologique, les NTC se présentent généralement sous la forme de grains de poudre agglomérés dont les dimensions moyennes sont de l'ordre de quelques centaines de microns. Les différences de dimensions, de forme, et de propriétés physiques font que les propriétés toxicologiques des poudres de NTC ne sont pas encore parfaitement connues. Il en est de même d'autres charges conductrices carbonées, telles que le noir de carbone ou les nanofibres de carbone. Il serait donc préférable de pouvoir travailler avec des charges conductrices carbonées sous une forme plus aisément manipulable.

A cet égard, le document US2004/0160156 décrit une méthode de préparation d'une électrode pour batterie à partir d'un mélange-maître, sous la forme de granules composés de NTC et d'une résine servant de liant, auquel est ajoutée une suspension de matière active d'électrode.

Dans ce document, la résine est présente en grande quantité au sein du mélange-maître, puisque les NTC sont présents dans des proportions allant de 5 à 20 parties en poids pour 100 parties en poids de résine. Ce taux important de liant est problématique pour le formulateur de matériaux d'électrodes qui souhaite utiliser des mélanges-maîtres « universels » dans des compositions prédéfinies sans engendrer de contraintes de formulation, en particulier sans limiter le choix du liant utilisé dans ces compositions. En outre, la présence d'une quantité importante de liant dans la formulations de l'encre électro-conductrice diminue la proportion de matériau actif d'électrode utilisable, et donc la capacité globale de la batterie.

Pour remédier à ces problèmes, la Demanderesse a proposé un mélange-maître sous forme solide agglomérée comprenant : de 15 à 40% en poids de NTC, au moins un solvant et de 1 à 40% en poids d'au moins un liant polymère (WO 2011/117530). Par ailleurs, le document EP 2 081 244 décrit une dispersion liquide à base de NTC, d'un solvant et d'un liante qui est destinée à être pulvérisée sur une couche de matériau actif d'électrode.

Il est toutefois apparu à la Demanderesse que les solutions proposées dans ces documents sont encore imparfaites, en ce sens qu'elles ne permettent pas toujours d'éviter la persistance d'agrégats de NTC dans ces compositions, de sorte qu'une fraction des NTC n'est pas utilisée de façon optimale pour améliorer la conductivité électrique de l'électrode obtenue à partir de ces compositions.

De son côté, le document US 2011/171364 suggère une autre solution pour réduire la quantité de liant dans les formulations d'encres électro-conductrices. Il décrit une pâte à base d'agglomérats de NTC mélangés à un dispersant tel que la poly(vinyl pyrrolidone) ou PVP, à un solvant aqueux ou organique, et éventuellement à un liant dont la présence est facultative. Le procédé de fabrication de cette pâte comprend une étape, présentée comme cruciale, de broyage (ou de passage aux ultrasons) d'amas enchevêtrés de NTC, ayant un diamètre moyen d'environ 100 µm, produits suivant un procédé de décomposition catalytique d'hydrocarbures en lit fluidisé. Cette étape permet l'obtention d'agglomérats de NTC ayant une traille inférieure à 10 µm dans au moins une dimension, c'est-à-dire un degré de dispersion, sur l'échelle de Hegman, supérieur à 7. Le broyage peut être effectué avant ou après mélange des NTC avec le dispersant, le solvant, et le liant éventuel. Une pâte de ce type est notamment disponible dans le commerce auprès de la société C NANO, sous la dénomination commerciale LB® 100.

La solution proposée dans ce document présente l'inconvénient d'utiliser un procédé de fabrication comprenant une étape de broyage, de préférence par pulvérisation, qui est susceptible de présenter des risques de pollution environnementale, voire des risques sanitaires. En outre, la pâte obtenue a une viscosité d'au moins 5.000 cPs, qui peut entraîner des difficultés de dispersion dans certains cas.

Le document US 2011/0171371 décrit la préparation d'une électrode de batterie Li-ion, comprenant une composition à base de nanotubes de carbone. Les performances de l'électrode sont améliorées en augmentant la teneur en matériau actif d'électrode, tout en réduisant le taux de liant présent dans la composition. A cette fin, afin de faciliter la dispersion des nanotubes de carbone dans la composition à faible teneur en liant, ce document préconise de réduire la taille des agglomérats de NTC, notamment à l'aide d'un broyeur à jets.

Il reste souhaitable de pouvoir disposer d'un procédé de fabrication d'une pâte à base de charges conductrices carbonées, en particulier de NTC, qui soit simple à mettre en oeuvre et plus respectueux de l'environnement que le procédé décrit dans US 2011/171364. Il subsiste également le besoin de disposer d'une pâte à base de telles charges, dans laquelle celles-ci sont dispersées efficacement et de façon stable, c'est-à-dire sans qu'il ne se produise au cours du temps de démixtion entre le solvant et la partie solide de la pâte, ladite pâte présentant par ailleurs une viscosité suffisamment faible pour pouvoir être facilement dispersée dans divers solvants et matrices polymères, quels que soient le mélangeur utilisé et les conditions de mélange mises en oeuvre.

### RESUME DE L'INVENTION

Ce besoin est satisfait, selon la présente invention, par l'utilisation d'un dispositif de malaxage pour préparer la composition renfermant des charges conductrices carbonées, un solvant et un liant, et par l'utilisation d'un dispersant, tel que la PVP, dans cette composition.

La présente invention porte précisément, selon un premier aspect, sur un procédé de préparation d'une composition pâteuse à base de charges conductrices carbonées, comprenant :
(i) l'introduction dans un malaxeur, puis le malaxage, de charges conductrices carbonées, d'au moins un liant polymérique, d'au moins un solvant et d'au moins un dispersant polymérique distinct dudit liant, choisi parmi la poly(vinyl pyrrolidone), le poly(phényl acétylène), le poly(meta-phénylène vinylidène), le polypyrrole, le poly(para-phénylène benzobisoxazole, le poly(alcool vinylique), et leurs mélanges, pour former un mélange-maître comprenant une proportion en poids de 15 à 40% de charges conductrices carbonées et de 50 à 75% de solvant et dans lequel le rapport en poids du liant polymérique aux charges conductrices carbonées est compris entre 0,04 et 0,4 et le rapport en poids du dispersant polymérique aux charges conductrices carbonées est compris entre 0,1 et 1, bornes incluses ;
(ii) l'extrusion dudit mélange-maître sous forme solide ;
(iii) la dilution dudit mélange-maître dans un solvant identique ou différent de celui de l'étape (i), pour obtenir une composition pâteuse présentant une viscosité comprise entre 400 et 600 mPa.s, déterminée pour un gradient de 100 s⁻¹ et à une température de 23°C, d'après la courbe de viscosité mesurée en faisant varier le gradient de cisaillement entre 1,2 et 1032 s⁻¹ à 23°C, à l'aide d'un viscosimètre dans lequel 20 ml de pâte sont introduits dans le cylindre de mesure qui est assemblé avec le mobile sur l'appareil.

L'invention porte également, selon un deuxième aspect, sur l'utilisation de ladite composition pâteuse pour la préparation de films minces, d'encres ou de revêtements conducteurs, notamment pour la fabrication d'électrodes de batteries Li-ion ou de supercapacités ; ou pour la préparation de matériaux composites conducteurs.

Le procédé selon la présente invention permet de rendre les charges conductrices carbonées facilement manipulables pour des applications en phase liquide, en les dispersant efficacement dans un milieu renfermant un solvant et un liant, adapté notamment à la fabrication d'une électrode, sans avoir recours à une étape comprenant le broyage (notamment dans un broyeur à billes ou par pulvérisation), le passage aux ultrasons ou le passage dans un système rotor-stator des charges conductrices carbonées, et sans utiliser de tensioactif.

### DESCRIPTION DETAILLEE

Les constituants mis en oeuvre dans la première étape du procédé selon l'invention seront à présents décrits plus en détails.

### Charges conductrices carbonées

Dans la suite de cette description, à des fins de simplicité, on désigne par "charge conductrice carbonée" une charge comprenant au moins un élément du groupe formé des nanotubes et nanofibres de carbone et du noir de carbone, et de graphène, ou un mélange de ceux-ci en toutes proportions.

Les nanotubes de carbone peuvent être du type monoparoi, à double paroi ou à parois multiples. Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456. On préfère selon l'invention des nanotubes de carbone multi-parois obtenus suivant un procédé de dépôt chimique en phase vapeur (ou CVD), par décomposition catalytique d'une source de carbone (de préférence d'origine végétale), tel que décrit notamment dans la demande EP 1 980 530 de la Demanderesse.

Les nanotubes ont habituellement un diamètre moyen allant de 0,1 à 100 nm, de préférence de 0,4 à 50 nm et, mieux, de 1 à 30 nm, voire de 10 à 15 nm, et avantageusement une longueur de 0,1 à 10 µm. Leur rapport longueur/diamètre est de préférence supérieur à 10 et le plus souvent supérieur à 100. Leur surface spécifique est par exemple comprise entre 100 et 300 m²/g, avantageusement entre 200 et 300 m²/g, et leur densité apparente peut notamment être comprise entre 0,05 et 0,5 g/cm³ et plus préférentiellement entre 0,1 et 0,2 g/cm³. Les nanotubes multiparois peuvent par exemple comprendre de 5 à 15 feuillets (ou parois) et plus préférentiellement de 7 à 10 feuillets. Ces nanotubes peuvent ou non être traités.

Un exemple de nanotubes de carbone bruts est notamment disponible dans le commerce auprès de la société ARKEMA sous la dénomination commerciale Graphistrength® C100.

Ces nanotubes peuvent être purifiés et/ou traités (par exemple oxydés) et/ou fonctionnalisés, avant leur mise en oeuvre dans le procédé selon l'invention.

La purification des nanotubes peut être réalisée par lavage à l'aide d'une solution d'acide sulfurique, de manière à les débarrasser d'éventuelles impuretés minérales et métalliques résiduelles, comme par exemple le fer, provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés. Les nanotubes peuvent en variante être purifiés par traitement thermique à haute température, typiquement supérieur à 1000°C.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

La fonctionnalisation des nanotubes peut être réalisée par greffage de motifs réactifs tels que des monomères vinyliques à la surface des nanotubes. Le matériau constitutif des nanotubes est utilisé comme initiateur de polymérisation radicalaire après avoir été soumis à un traitement thermique à plus de 900°C, en milieu anhydre et dépourvu d'oxygène, qui est destiné à éliminer les groupes oxygénés de sa surface. Il est ainsi possible de polymériser du méthacrylate de méthyle ou du méthacrylate d'hydroxyéthyle à la surface de nanotubes de carboné en vue de faciliter notamment leur dispersion dans le PVDF.

On peut utiliser dans la présente invention des nanotubes bruts, c'est-à-dire des nanotubes qui ne sont ni oxydés ni purifiés ni fonctionnalisés et n'ont subi aucun autre traitement chimique et/ou thermique. En variante, on peut utiliser des nanotubes purifiés, notamment par traitement thermique à haute température. On préfère par ailleurs que les nanotubes de carbone ne soient pas broyés.

Les nanofibres de carbone sont, comme les nanotubes de carbone, des nanofilaments produits par dépôt chimique en phase vapeur (ou CVD) à partir d'une source carbonée qui est décomposée sur un catalyseur comportant un métal de transition (Fe, Ni, Co, Cu), en présence d'hydrogène, à des température de 500 à 1200°C. Toutefois, ces deux charges carbonées se différencient par leur structure (I. MARTI-GULLON et al., Cardon 44 (2006) 1572-1580). En effet, les nanotubes de carbone sont constitués d'un ou plusieurs feuillets de graphène enroulés manière concentrique autour de l'axe de la fibre pour former un cylindre ayant un diamètre de 10 à 100 nm. Au contraire, les nanofibres de carbone se composent de zones graphitiques plus ou moins organisées (ou empilements turbostratiques) dont les plans sont inclinés à des angles variables par rapport à l'axe de la fibre. Ces empilements peuvent prendre la forme de plaquettes, d'arêtes de poisson ou de coupelles empilées pour former des structures ayant un diamètre allant généralement de 100 nm à 500 nm voire plus. Par ailleurs, le noir de carbone est un matériau carboné colloïdal fabriqué industriellement par combustion incomplète de produits pétroliers lourds, qui se présente sous forme de sphères de carbone et d'agrégats de ces sphères et dont les dimensions sont généralement comprises entre 10 et 1000 nm.

On préfère utiliser des nanofibres de carbone ayant un diamètre de 100 à 200 nm, par exemple d'environ 150 nm (VGCF® de SHOWA DENKO), et avantageusement une longueur de 100 à 200 µm.

Par graphème, on désigne un feuillet de graphite plan, isolé et individualisé, mais aussi, par extension, un assemblage comprenant entre un et quelques dizaines de feuillets et présentant une structure plane ou plus ou moins ondulée. Cette définition englobe donc les FLG (Few Layer Graphene ou graphène faiblement empilé), les NGP (Nanosized Graphene Plates ou plaques de graphène de dimension nanométrique), les CNS (Carbon NanoSheets ou nano-feuilles de graphène), les GNR (Graphene NanoRibbons ou nano-rubans de graphène). Elle exclut en revanche les nanotubes et nanofibres de carbone, qui sont respectivement constitués de l'enroulement d'un ou plusieurs feuillets de graphène de manière coaxiale et de l'empilement turbostratique de ces feuillets.

On préfère par ailleurs que le graphène utilisé selon l'invention ne soit pas soumis à une étape supplémentaire d'oxydation chimique ou de fonctionnalisation.

Le graphène utilisé selon l'invention est obtenu avantageusement par dépôt chimique en phase vapeur ou CVD, de préférence selon un procédé utilisant un catalyseur pulvérulent à base d'un oxyde mixte. Il se présente, de façon caractéristique, sous forme de particules d'une épaisseur de moins de 50 nm, de préférence de moins de 15 nm, plus préférentiellement de moins de 5 nm et de dimensions latérales inférieures au micron, de préférence de 10 nm à moins de 1000 nm, plus préférentiellement de 50 à 600 nm, voire de 100 à 400 nm. Chacune de ces particules renferme en général de 1 à 50 feuillets, de préférence de 1 à 20 feuillets et plus préférentiellement de 1 à 10 feuillets, voire de 1 à 5 feuillets qui sont susceptibles d'être désolidarisés les uns des autres sous la forme de feuillets indépendantes, par exemple lors d'un traitement par ultrasons.

Selon une forme d'exécution préférée de l'invention, les charges conductrices carbonées comprennent des nanotubes de carbone, de préférence des nanotubes multi- parois obtenus suivant un procédé de dépôt chimique en phase vapeur, et éventuellement des nanofibres de carbone et/ou du noir de carbone et/ou du graphème.

Les charges conductrices carbonées représentent de 15 à 40% en poids, de préférence de 20 à 35% en poids, par rapport au poids du mélange-maître.

### Liant polymérique

Le liant polymérique utilisé dans la présente invention est choisi avantageusement dans le groupe constitué par les polysaccharides, les polysaccharides modifiés, les polyéthers, les polyesters, les polymères acryliques, les polycarbonates, les polyimines, les polyamides, les polyacrylamides, les polyuréthannes, les polyépoxydes, les polyphosphazènes, les polysulfones, les polymères halogénés, les caoutchoucs naturels, les élastomères fonctionnalisés ou non, notamment les élastomères à base de styrène, butadiène et/ou isoprène, et leurs mélanges. Ces liants polysériques peuvent être utilisés sous forme solide ou sous forme de solution ou de dispersion liquide (type latex) ou encore sous forme de solution supercritique.

De façon préférée, pour une utilisation dans la fabrication d'une électrode, le liant polymérique est choisi dans le groupe constitué par les polymère halogénés et de façon encore plus préférée parmi les polymères fluorés définis notamment de la façon suivante :
(i) ceux comprenant au moins 50% molaire d'au moins un monomère de formule (I) :

   CFX₁=CX₂X₃ (I)

   où X₁, X₂ et X₃ désignent indépendamment un atome d'hydrogène ou d'halogène (en particulier de fluor ou de chlore), tels que le poly(fluorure de vinylidène) (PVDF), de préférence sous forme α, le poly(trifluoroéthylène) (PVF3), le polytétrafluoroéthylène (PTFE), les copolymères de fluorure de vinylidène avec soit l'hexafluoropropylène (HFP), soit le trifluoroéthylène (VF3), soit le tétrafluoroéthylène (TFE), soit le chlorotrifluoroéthylène (CTFE), les copolymères fluoroéthylène / propylène (FEP), les copolymères d'éthylène avec soit le fluoroéthylène/propylène (FEP), soit le tétrafluoroéthylène (TFE), soit le chlorotrifluoroéthylène (CTFE) ;
(ii) ceux comprenant au moins 50% molaire d'au moins un monomère de formule (II) :

   R-O-CH-CH₂ (II)
où R désigne un radical alkyle perhalogéné (en particulier perfluoré), tels que le perfluoropropyl vinyléther (PPVE), le perfluoroéthyl vinyléther (PEVE) et les copolymères d'éthylène avec le perfluorométhylvinyl éther (PMVE),
de préférence le PVDF.

Lorsqu'il est destiné à être intégré dans des formulations en milieu aqueux, le mélange-maître selon l'invention renferme avantageusement, en tant que liant, au moins un polysaccharide modifié tel qu'une cellulose modifiée, en particulier la carboxyméthylcellulose. Celui-ci peut se présenter sous forme de solution aqueuse ou sous forme solide ou encore sous forme de dispersion liquide.

Le liant polymérique, peut représenter de 1 à 15% en poids, de préférence de 2 à 10% en poids, par rapport au poids du mélange-maître. Le rapport en poids du liant polymérique, aux charges conductrices carbonées est: compris entre 0,04 et 0, 4, et on préfère par ailleurs qu'il soit compris entre 0,05 et 0,12, bornes incluses.

### Dispersant polymérique

Le dispersant polymérique utilisé dans le mélange-maître préparé selon l'invention est un polymère choisi parmi la poly(vinyl pyrrolidone) ou PVP, le poly(phényl acétylène) ou PAA, le poly(meta-phénylène vinylidène) ou PmPV, le polypyrrole ou PPy, le poly(para-phénylène benzobisoxazole) ou PBO, le poly(alcool vinylique) ou PVA, et leurs mélanges. On préfère utiliser la PVP.

Le dispersant polymérique peut représenter de 1 à 40% en poids, de préférence de 2 à 10% en poids, par rapport au poids du mélange-maître. Le rapport en poids du dispersant polymérique, aux charges conductrices carbonées est compris entre 0,1 et 1, bornes incluses et on préfère par ailleurs qu'il soit compris entre 0,25 et 0,8, bornes incluses.

### Solvant

Les solvants utilisés dans l'étape (i) et dans l'étape (iii) peuvent être choisis parmi un solvant organique ou de l'eau ou leurs mélanges en toutes proportions. On peut citer parmi les solvants organiques la N-méthyl pyrrolidone (NMP), le diméthyl sulfoxide (DMSO), le diméthylformamide (DMF), les cétones, les acétates, les furanes, les alkylcarbonates, les alcools et leurs mélanges. La NMP, le DMSO et le DMF sont préférés pour une utilisation dans la présente invention, la NMP étant particulièrement préférée.

La quantité de solvant présente dans le mélange-maître est comprise entre 50 et 75% en poids et, de préférence, entre 60 à 75% en poids, bornes incluses, par rapport au poids total du mélange-maître.

On veillera bien entendu, dans le choix des proportions des différents constituants décrits ci-dessus, que l'ensemble des constituants du mélange-maître représente 100% en poids.

Dans la première étape du procédé selon l'invention, les charges conductrices carbonées, le liant polymérique, le dispersant polymérique et le solvant sont introduits puis malaxés dans un malaxeur.

On préfère utiliser comme malaxeur un dispositif de compoundage. Les dispositifs de compoundage sont bien connus de l'homme du métier et comprennent généralement des moyens d'alimentation, notamment au moins une trémie pour les matériaux pulvérulents et/ou au moins une pompe d'injection pour les matériaux liquides ; des moyens de malaxage à fort cisaillement, par exemple une extrudeuse à double vis co-rotative ou contre-rotative ou un co-malaxeur, comprenant habituellement une vis sans fin disposée dans un fourreau (tube) chauffe ; une tête de sortie qui donne sa forme au matériau sortant ; et des moyens de refroidissement, sous air ou à l'aide d'un circuit d'eau, du matériau. Celui-ci se trouve généralement sous forme de jonc sortant en continu du dispositif et qui peut être découpé ou mis sous forme de granulés. D'autres formes peuvent toutefois être obtenues en adaptant une filière de la forme voulue sur à filière de sortie.

Des exemples de co-malaxeurs utilisables selon ou sont les co-malaxeurs BUSS® MDK 46 et ceux de la série BUSS® MKS ou MX, commercialisés par la société BUSS AG, qui sont tous constitués d'un arbre à vis pourvu d'ailettes, disposé dans un fourreau chauffant éventuellement constitué de plusieurs parties et dont la paroi interne est pourvue de dents de malaxage adaptées à coopérer avec les ailettes pour produire un cisaillement de la matière malaxée. L'arbre est entraîné en rotation, et pourvu d'un mouvement d'oscillation dans la direction axiale, par un moteur. Ces co-malaxeurs peuvent être équipés d'un système de fabrication de granulés, adaptés par exemple à leur orifice de sortie, qui peut être constitué d'une vis d'extrusion et d'un dispositif de granulation.

Les co-malaxeurs utilisables selon l'invention ont de préférence une rapport de vis L/D allant de 7 à 22, par exemple de 10 à 20, avantageusement de 11, tandis que les extrudeuses co-rotatives ont avantageusement un rapport L/D allant de 15 à 56, par exemple de 20 à 50.

Un mode de réalisation préféré de l'étape (i) consiste à procéder au malaxage du mélange à l'aide d'une extrudeuse à double vis co-rotative ou contre-rotative ou plus préférentiellement à l'aide d'un co-malaxeur (notamment de type BUSS®) comprenant un rotor pourvu d'ailettes adaptées à coopérer avec des dents montées sur un stator, ledit co-malaxeur étant avantageusement équipé d'une vis d'extrusion et d'un dispositif de granulation. Le malaxage peut être réalisé à une température comprise entre 2C°C et 90°C, de préférence entre 60 et 80°C, bornes incluses.

Les constituants du mélange-maître peuvent être introduits séparément dans le malaxeur, ou sous forme de prémélanges de deux au moins de ces constituants. Notamment, la poudre du polymère liant peut être préalablement dissoute dans le solvant avant introduction dans le malaxeur. En variante, les charges conductrices carbonées, le liant polymérique et le dispersant polymérique, peuvent être introduits séparément, ou sous forme de pré-mélange, dans la trémie d'alimentation du co-malaxeur, tandis que le solvant est injecté sous forme liquide dans la première zone du co-malaxeur.

A l'issue de cette étape, le mélange-maître est extrudé sous forme solide puis éventuellement découpé, notamment sous forme de granulés. Une étape de mise en forme de granulés à partir du mélange-maître peut ainsi être prévue entre les étapes (il) est (iii) du procédé selon l'invention.

Le mélange-maître est ensuite dilué dans un solvant identique ou différent de celui de l'étape (i), pour obtenir une composition pâteuse. Cette étape (iii) peut être de préférence mise en oeuvre dans un malaxeur tel que celui utilisé dans l'étape (i), ou en variante dans un autre dispositif de mélangeage tel qu'un défloculeur. Le taux de dilution dans l'étape (iii), c'est-à-dire le rapport en poids du solvant au mélange-maître, peut être compris entre 2 :1 et 10 :1, de préférence entre 3:1 et 5:1.

Il est bien entendu que le procédé ci-dessus peut comprendre d'autres étapes préliminaires, intermédiaires ou subséquentes, pour autant qu'elles n'affectent pas négativement l'obtention de la composition pâteuse recherchée. Il peut en particulier comprendre une ou plusieurs étapes d'adjonction d'un ou plusieurs additifs organiques ou inorganiques. On préfère toutefois que ce procédé ne comprenne aucune étape de broyage des charges conductrices carbonées, de passage des charges conductrices carbonées aux ultrasons ou dans un dispositif rotor-stator et/ou d'adjonction de tensioactif(s).

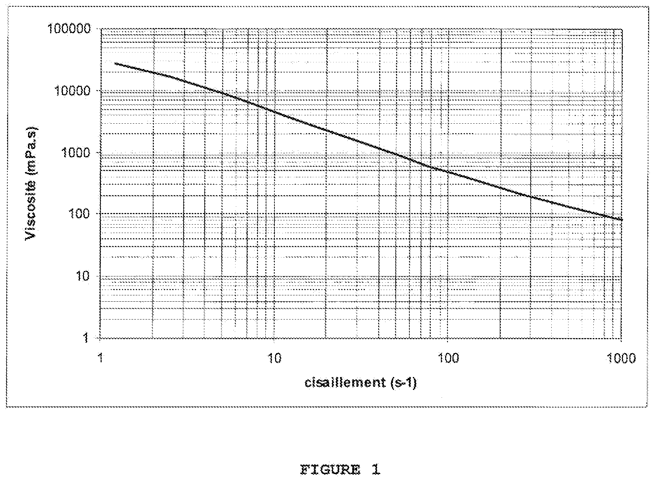

La composition pâteuse ainsi obtenue présente une viscosité plus ou moins importante selon les applications envisagées, allant de la consistance d'un liquide à celle d'une pâte de type goudron. Elle peut ainsi être comprise entre environ 400 et 600 mPa.s, telle que mesurée à l'aide d'un viscosimètre Lamy modèle Rhéomat RM100 muni d'un système de mesure DIN22 et piloté par un logiciel d'acquisition Lamy VISCO-RM Soft, suivant le protocole suivant: on introduit 20 ml de pâte dans le cylindre de mesure, qui est ensuite assemblé avec le mobile sur l'appareil. On trace alors une courbe de viscosité en faisant varier le gradient entre 1,2 et 1032 s⁻¹ à une température de 23°C, puis on relève la viscosité correspondant à un gradient de 100s⁻¹ (voir la Figure 1).

Cette composition pâteuse se distingue en particulier d'un solide, dans la mesure où il n'est pas possible de mesurer son module d'Young à température ambiante, et où son point de ramollissement est inférieur à la température ambiante.

La composition pâteuse obtenue selon l'invention renferme avantageusement de 0,5 à 20% en poids, de préférence de 1 à 15% en poids et, mieux, de 4 à 7% en poids de charges conductrices carbonées.

Elle peut être utilisée dans diverses applications telle quelle, ou après dilution dans un solvant tel que celui mis en oeuvre à l'étape (i) et/ou (iii). Cette pâte peut notamment être utilisée pour la préparation de films minces, d'encres ou de revêtements conducteurs, notamment pour la fabrication d'électrodes de batteries Li-ion ou de supercapacités ; ou pour la préparation de matériaux composites conducteurs en l'introduisant, par exemple, dans une matrice polymère à base de polyuréthane ; ou encore dans la fabrication de peintures, lubrifiants ou textiles.

Le procédé de préparation d'une électrode à partir de la composition pâteuse selon l'invention peut comprendre les étapes suivantes :
a) La préparation d'une solution par dissolution d'au moins un premier liant polymérique dans au moins un premier solvant ;
b) Eventuellement, l'ajout d'un matériau actif d'électrode à ladite solution ;
c) Le mélange du produit issu de l'étape b) avec la composition pâteuse selon l'invention renfermant un second liant polymérique, un second solvant et éventuellement un troisième solvant, éventuellement diluée dans un solvant de dilution, pour former une composition d'enduction ;
d) Eventuellement, l'ajout d'un matériau actif d'électrode au produit de l'étape (C);
e) Le dépôt de ladite composition d'enduction sur un substrat pour former un film ;
f) Le séchage dudit film,
l'une au moins des étapes (b) et (d) étant incluse.

Dans ce procédé, le second solvant désigne celui utilisé dans la fabrication du mélange-maître et le troisième solvant désigne le solvant utilisé pour fabriquer la composition pâteuse à partir du mélange-maître. Il est entendu que les premier, second et troisième solvants, ainsi que le solvant de dilution, peuvent être identiques ou différents les uns des autres, et choisis dans la liste mentionnée précédemment. On préfère qu'ils soient tous identiques. De même, le premier liant peut être identique au second liant ou différent de celui-ci. On préfère également qu'ils soient identiques.

Dans ce procédé, les agitateurs de type « floculateur » sont préférés pour la mise en oeuvre de l'étape (a). Dans les étapes (b) et (d), le matériau actif d'électrode peut être dispersé sous agitation sous forme de poudre dans le mélange issu de l'étape (a) ou (c), respectivement.

Ce matériau actif d'électrode peut être choisi dans le groupe constitué par :
i) les oxydes de métaux de transition à structure spinelle de type LiM₂O₄, où M représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo, lesdits oxydes contenant de préférence au moins un atome de Mn et/ou de Ni;
ii) les oxydes de métaux de transition à structure lamellaire de type LiMO₂ où M représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo, lesdits oxydes contenant de préférence au moins un des atomes sélectionnés dans le groupe formé par Mn, Co et Ni;
iii) les oxydes à charpentes polyanioniques de type LiM_{y}(XO₂)ₙ où :
   ∘ M représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo, et
   o X représente un des atomes sélectionnés dans le groupe formé par P, Si, Ge, S et As,
   de préférence LiLFePO₄,
iv) les oxydes à base de vanadium,
v) le graphite,
vi) les titanates.

Les matériaux actifs d'électrodes i) à iv) sont davantage adaptés à la préparation de cathodes, et préférés selon l'invention, tandis que les matériaux actifs d'électrodes v) et vi) sont davantage adaptés à la préparation d'anodes.

La dispersion du premier liant est mélangée avec la composition pâteuse selon l'invention dans l'étape (c). Ce mélange peut s'effectuer à l'aide de moyens mécaniques quelconques, pour autant qu'ils permettent d'obtenir une dispersion homogène. On préfère selon l'invention que le mélange de l'étape (c) s'effectue à l'aide d'un mélangeur de type « floculateur ».

Lors de l'étape (e), le film obtenu à partir de la suspension issue de l'étape (c) ou (d) peut être déposé sur un substrat par tout moyen conventionnel, par exemple par extrusion, par épandage (tape casting), par enduction ou par pulvérisation (spray drying) suivi d'une étape de séchage (étape (f)).

Le substrat peut en particulier être un collecteur de courant. On obtient ainsi une électrode.

Les proportions des différents composés utilisés dans le procédé ci-dessus sont ajustées de telle manière que le film obtenu renferme avantageusement de 1 à 2% en poids de charges conductrices carbonées.

Grâce au procédé selon l'invention, il est notamment possible de distribuer les nanotubes de carbone de telle façon qu'ils forment un maillage autour des particules de matériau actif et jouent ainsi un rôle à la fois d'additif conducteur mais aussi de maintien mécanique, important pour accommoder les variations volumiques lors des étapes de charge-décharge. D'une part, ils assurent la distribution aux particules de matériau actif des électrons et, d'autre part, en raison de leur longueur et de leur souplesse, ils forment des ponts électriques entre les particules de matériau actif qui se déplacent suite à leur variation de volume. Lorsqu'ils sont utilisés seuls, les additifs conducteurs usuels (carbone SP, le noir d'acétylène et graphite), avec leur facteur de forme peu élevé, sont moins efficaces pour assurer le maintien au cours du cyclage du transport des électrons depuis le collecteur de courant. En effet, avec ce type d'additifs conducteurs, les chemins électriques sont formés par la juxtaposition de grains et les contacts entre eux sont facilement rompus suite à l'expansion volumique des particules du matériau actif.

L'invention sera maintenant illustrée par les exemples suivants, qui n'ont pas pour but de limiter la portée de l'invention, définie par les revendications. Dans ces exemples, il est fait référence aux figures annexées dans desquelles :
- la Figure 1 illustre la courbe de viscosité d'une pâte selon l'invention en fonction du cisaillement,
- la a Figure 2 est un cliché au MEB (grossissement : 50.000 fois) montrant la dispersion des NTC, obtenus à partir de la pâte selon l'invention, autour de particules de LiFePO4/C,
- la Figure 3 est un cliché au MEB (grossissement : 50.000 fois) montrant la dispersion des NTC, obtenus à partir d'une pâte dépourvue de dispersant, autour de particules de LiFePO4/C, et
- la Figure 4 illustre les courbes de viscosité d'une pâte selon l'invention et d'une pâte commerciale, en fonction du cisaillement.

### EXEMPLES

### Exemple 1 : Fabrication d'une composition pâteuse selon l'invention

Des NTC (Graphistrength® C100 d'ARKEMA) ont été introduits dans la première trémie d'alimentation d'un co-malaxeur BUSS® MDK 46 (L/D = 11), équipé d'une vis d'extrusion de reprise et d'un dispositif de granulation. Du poly(fluorure de vinylidène) (PVDF) (Kynar® HSV 900 d'ARKEMA) et de la poly(vinyl pyrrolidone) (PVP) ont été dosés dans la même trémie sous forme de poudre. De la N-méthyl pyrrolidone (NMP) a été injectée sous forme liquide à 50°C dans la 1ère zone du co-malaxeur. Les consignes de température et le débit au sein du co-malaxeur étaient les suivantes : *Zone 1* : 80°C, *Zone 2* : 80°C, *Vis* : 60°C, *débit* : 15 kg/h.

A la sortie du co-malaxeur, on a obtenu un mélange-maître solide renfermant : 25% en poids de NTC, 2% en poids de PVDF, 7% en poids de PVP et 66% en poids de NMP.

La découpe des granulés a été réalisée à sec à la sortie de à filière.

Ceux-ci ont été introduits dans la première zone du co-malaxeur et de la NMP supplémentaire a été injectée dans à même zone, à raison de 80% en poids de NMP pour 20% en poids de granulés. Le profil de température et le débit étaient inchangés. A la sortie de l'extrudeuse de reprise, on a obtenue une pâte homogène qui a été collectée directement dans des fûts métalliques.

La pâte avait la composition suivante : 5% en poids de N'I'C, 0,4% en poids de PVDF, 1,4% en poids de PVP et 93,2% en poids de NMP.

Après 2 mois de stockage, on n'a pas constaté d'évolution de la viscosité, ni de phénomène de démixtion (pas de présence de liquide surnageant).

Les nanotubes de carbone de cette pâte ont été observés :
- d'une part, au microscope électronique à balayage (MEB) après dilution (x 10) de la pâte puis évaporation de la NMP, et
- d'autre part, par analyse granulométrique, à l'aide d'un granulomètre MALVERN, après forte dilution (x 100.000) de la pâte.

Ces observations ont montré que les nanotubes de carbone étaient bien dispersés et qu'ils formaient des agrégats de 3 à 10 µm mélangés à des nanotubes individuels de longueur comprise entre 0,2 et 1 µm.

### Exemple 2 : Utilisation d'une composition pâteuse pour la fabrication d'une électrode

*Etape a)* On a préparé une composition pâteuse comme décrit à l'Exemple 1, excepté qu'elle renfermait 5% en poids de NTC, 1% en poids de PVP, 0,8% en poids de PVDF et 93,2% en poids de NMP. 40 g de cette composition ont été versés dans 85,6 g de NMP et mélangés à l'aide d'un agitateur défloculeur de 50 mm de diamètre, à 850 tr/min pendant 1h. La solution obtenue a été désignée par « Premix NTC ».
*Etape b)* On a préparé une solution de PVDF (Kynar® HSV 900 d'ARKEMA) à 12% dans la NMP, à l'aide d'un agitateur de type floculateur pendant 4 heures à 50°C.
*Etape c)* 30,9 g de la solution de PVDF ont été dispersés dans le "Premix NTC" à 1.100 tr/min pendant 5 minutes.
*Etape d)* 93,6 g de poudre de LiFePO4/C (LFP) (grade 2B de Prayon) ont été dispersés progressivement dans la dispersion précédente en maintenant la vitesse d'agitation à 1.100 tr/min. L'augmentation de viscosité du milieu a ensuite permis d'augmenter la vitesse d'agitation jusqu'à 1.700 tr/min. Cette vitesse d'agitation a été maintenue pendant une heure.
   La composition de l'encre en matière sèche était la suivante : 2% en poids de NTC ; 4% en poids de PVDF, 0,4% en poids de PVP et 93,6% en poids de LiFePO4/C, avec un taux de matière sèche de 40% dans le solvant NMP.
*Etape e)* A l'aide d'un filmographe type Sheen et d'un applicateur BYK-Gardner® réglable, un film de 200µm d'épaisseur a été réalisé sur une feuille de 25µm.
*Etape f)* Le film réalisé lors de l'étape e) a été séché à 55°C pendant 4h en étuve ventilée, puis compressé sous 200 bars pour obtenir une épaisseur finale de matière active d'environ 60 µm.

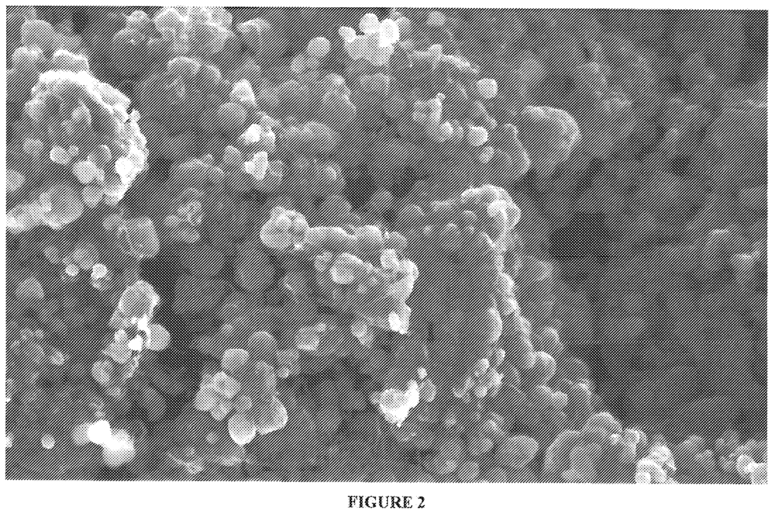

Des observations au MEB (voir Figure 2) ont montré que les NTC sont bien dispersés autour des particules micrométriques de LiFePO4/C. Par ailleurs, la conductivité électrique de l'électrode obtenue est égale à 2,8 µS/cm.

### Exemple 3 (comparatif) : Analyse d'une pâte de NTC sans dispersant

En partant d'une pâte préparée comme décrit à l'Exemple 1 mais ne renfermant pas de PVP, on a préparé, conformément au procédé décrit à l'Exemple 2, un film renfermant 2% en poids de NTC, 4% en poids de PVDF et 94% en poids de LiFePO4/C avec un taux de matières sèches de 40% dans la NMP.

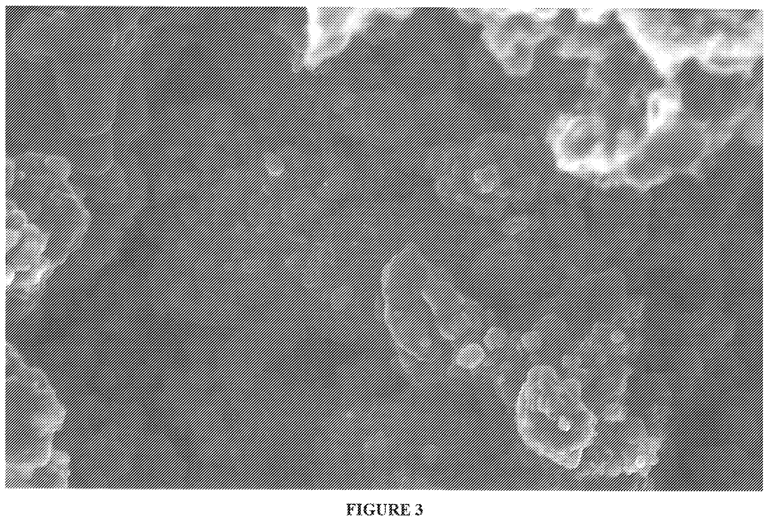

Ce film a été observé au MEB. Comme il ressort de la Figure 3, les NTC se présentent sous forme d'agrégats non dispersés autour des particules micrométriques de LiFePO4/C, ce qui se traduit par une diminution significative de la conductivité électrique, qui s'établit à 0,05 µS/cm, par rapport à celle mesurée dans l'Exemple 2.

Il apparaît ainsi que la PVP, bien qu'utilisée en faible quantité dans l'Exemple 2, contribue nettement à la bonne dispersion des NTC. Elle permet en outre d'obtenir une meilleure conductivité.

### Exemple 4 (comparatif) : Analyse d'une pâte de NTC du commerce

La pâte de NTC commercialisée par la société C NANO sous la dénomination commerciale LB100® a été comparée à une pâte préparée suivant le procédé conforme à l'invention, tel que décrit à l'Exemple 1, Selon la fiche technique, le produit LB100 comprend de 1 à 5% de NTC, de 0,2 à 1,25% de dispersant et de 93 à 98% de NMP.

Pour ce faire, les deux pâtes ont été soumises à une mesure de viscosité à l'aide d'un viscosimètre Lamy modèle Rhéomat RM100 muni d'un système de mesure DIN22 et piloté par un logiciel d'acquisition Lamy VISCO-RM Soft, suivant le protocole suivant: on introduit 20 ml de pâte dans le cylindre de mesure, qui est ensuite assemblé avec le mobile sur l'appareil. On trace alors une courbe de viscosité en faisant varier le gradient entre 1,2 et 1032 s⁻¹ à une température de 23°C.

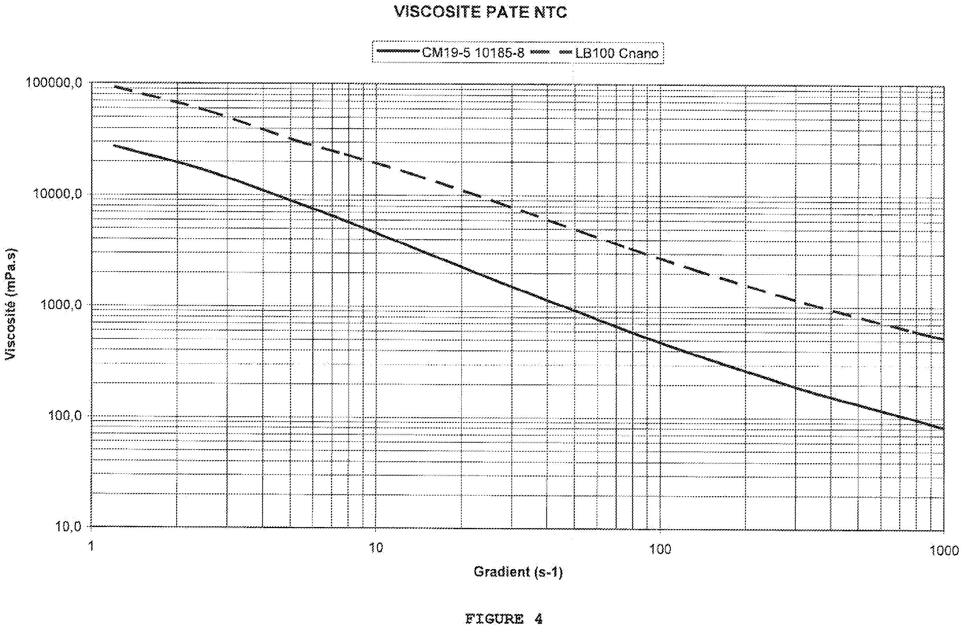

Comme il ressort de la Figure 4, à un cisaillement de 100 s⁻¹, la viscosité de la pâte selon l'invention est d'environ 500 mPa.s, tandis qu'elle est d'environ 3.000 mPa.s pour la pâte commerciale.

Il apparaît ainsi que la pâte obtenue suivant le procédé selon l'invention est plus fluide, et donc plus facile à manipuler, que la pâte commerciale.

## Revendications

1. Procédé de préparation d'une composition pâteuse à base de charges conductrices carbonées, comprenant :
(i) l'introduction dans un malaxeur, puis le malaxage, de charges conductrices carbonées, d'au moins un liant polymérique, d'au moins un solvant, et d'au moins un dispersant polymérique distinct dudit liant choisi parmi la poly(vinyl pyrrolidone), le poly(phényl acétylène), le poly(meta-phénylène vinylidène), le polypyrrole, le poly(para-phénylène benzobisoxazole, le poly(alcool vinylique), et leurs mélanges, pour former un mélange-maître comprenant une proportion en poids de 15 à 40% de charges conductrices carbonées et de 50 à 75% de solvant et dans lequel le rapport en poids du liant polymérique aux charges conductrices carbonées est compris entre 0,04 et 0,4 et le rapport en poids du dispersant polymérique aux charges conductrices carbonées est compris entre 0,1 et 1, bornes incluses;
(ii) l'extrusion dudit mélange-maître sous forme solide ;
(iii) la dilution dudit mélange-maître dans un solvant identique ou différent de celui de l'étape (i), pour obtenir une composition pâteuse présentant une viscosité comprise entre 400 et 600 mPa.s, déterminée pour un gradient de 100 s⁻¹ et à une température de 23°C, d'après la courbe de viscosité mesurée en faisant varier le gradient de cisaillement entre 1,2 et 1032 s⁻¹ à 23°C, à l'aide d'un viscosimètre dans lequel 20 ml de pâte sont introduits dans le cylindre de mesure qui est assemblé avec le mobile sur l'appareil.

2. Procédé selon la revendication 1, **caractérisé en ce que** les charges conductrices carbonées comprennent des nanotubes de carbone, des nanofibres de carbone, du noir de carbone, ou du graphène, ou un mélange de ceux-ci en toutes proportions, de préférence des nanotubes de carbone multi-parois obtenus suivant un procédé de dépôt chimique en phase vapeur, et éventuellement des nanofibres de carbone et/ou du noir de carbone et/ou du graphène.

3. Procédé selon l'une des revendications 1 et 2, **caractérisé en ce que** ledit liant polymérique est choisi dans le groupe constitué par les polysaccharides, les polysaccharides modifiés, les polyéthers, les polyesters, les polymères acryliques, les polycarbonates, les polyimines, les polyamides, les polyacrylamides, les polyuréthanes, les polyépoxydes, les polyphosphazènes, les polysulfones, les polymères halogénés, les caoutchoucs naturels, les élastomères fonctionnalisés ou non, notamment les élastomères à base de styrène, butadiène et/ou isoprène, et leurs mélanges.

4. Procédé selon la revendication 3, **caractérisé en ce que** le liant polymérique est choisi dans le groupe constitué les polymères fluorés, tels que :
(i) ceux comprenant au moins 50% molaire d'au moins un monomère de formule (I) :
CFX₁=CX₂X₃ (I)
où X₁, X₂ et X₃ désignent indépendamment un atome d'hydrogène ou d'halogène (en particulier de fluor ou de chlore), tels que le poly(fluorure de vinylidène) (PVDF), de préférence sous forme α, le poly(trifluoroéthylène) (PVF3), le polytétrafluoroéthylène (PTFE), les copolymères de fluorure de vinylidène avec soit l'hexafluoropropylène (HFP), soit le trifluoroéthylène (VF3), soit le tétrafluoroéthylène (TFE), soit le chlorotrifluoroéthylène (CTFE), les copolymères fluoroéthylène / propylène (FEP), les copolymères d'éthylène avec soit le fluoroéthylène/propylène (FEP), soit le tétrafluoroéthylène (TFE), soit le chlorotrifluoroéthylène (CTFE) ;
(ii) ceux comprenant au moins 50% molaire d'au moins un monomère de formule (II) :
R-O-CH-CH₂ (II)
où R désigne un radical alkyle perhalogéné (en particulier perfluoré), tels que le perfluoropropyl vinyléther (PPVE), le perfluoroéthyl vinyléther (PEVE) et les copolymères d'éthylène avec le perfluorométhylvinyl éther (PMVE)
de préférence le PVDF.

5. Procédé selon l'une quelconque des revendications 1 à 4, **caractérisé en ce que** ledit solvant est la N-méthyl pyrrolidone, le diméthyl sulfoxide, le diméthylformamide, de préférence la N-méthyl pyrrolidone.

6. Procédé selon l'une quelconque des revendications 1 à 5, **caractérisé en ce que** le dispersant polymérique est la poly(vinylpyrrolidone).

7. Procédé selon l'une quelconque des revendications 1 à 6, **caractérisé en ce que** le malaxeur est un dispositif de compoundage choisi parmi une extrudeuse à double vis co-rotative ou contre-rotative et un co-malaxeur comprenant un rotor pourvu d'ailettes adaptées à coopérer avec des dents montées sur un stator.

8. Procédé selon l'une quelconque des revendications 1 à 7, **caractérisé en ce qu'**une étape de mise en forme de granulés à partir du mélange-maître est en outre incluse entre les étapes (ii) et (iii).

9. Procédé selon l'une quelconque des revendications 1 à 8, caractérisé en ce l'étape (iii) est mise en oeuvre dans un malaxeur.

10. Procédé selon l'une quelconque des revendications 1 à 9, **caractérisé en ce que** le taux de dilution dans l'étape (iii) est compris entre 2 :1 et 10 :1, de préférence entre 3:1 et 5:1.

11. Utilisation de la composition pâteuse obtenue suivant le procédé selon l'une quelconque des revendications 1 à 10 pour la préparation de films minces, d'encres ou de revêtements conducteurs, notamment pour la fabrication d'électrodes de batteries Li-ion ou de supercapacités ; ou pour la préparation de matériaux composites conducteurs.

## Patentansprüche

1. Verfahren zur Herstellung einer pastösen Zusammensetzung auf Basis von kohlenstoffhaltigen leitfähigen Füllstoffen, umfassend:
(i) das Eintragen von kohlenstoffhaltigen leitfähigen Füllstoffen, mindestens einem polymeren Bindemittel, mindestens einem Lösungsmittel und mindestens einem polymeren Dispergiermittel, das von dem Bindemittel verschieden ist und aus Poly-(vinylpyrrolidon), Poly(phenylacetylen), Poly-(meta-phenylenvinyliden), Polypyrrol, Poly(para-phenylenbenzobisoxazol), Poly(vinylalkohol) und Mischungen davon ausgewählt ist, in einen Kneter mit anschließendem Mischen zur Bildung eines Masterbatch, der einen Gewichtsanteil von 15 bis 40 % kohlenstoffhaltigen leitfähigen Füllstoffen und 50 bis 75 % Lösungsmittel umfasst und in dem das Gewichtsverhältnis von polymerem Bindemittel zu kohlenstoffhaltigen leitfähigen Füllstoffen zwischen 0,04 und 0,4 liegt und das Gewichtsverhältnis von polymerem Dispergiermittel zu kohlenstoffhaltigen leitfähigen Füllstoffen zwischen 0,1 und 1 liegt, wobei die Grenzwerte eingeschlossen sind;
(ii) das Extrudieren des Masterbatch in fester Form;
(iii) das Verdünnen des Masterbatch in einem Lösungsmittel, das mit demjenigen von Schritt (i) identisch oder davon verschieden ist, zum Erhalt einer pastösen Zusammensetzung mit einer Viskosität zwischen 400 und 600 mPa.s, bestimmt für einen Gradienten von 100 s⁻¹ und bei einer Temperatur von 23 °C gemäß der unter Variation des Schergradienten zwischen 1,2 und 1032 s⁻¹ bei 23 °C mit Hilfe eines Viskosimeters gemessenen Viskositätskurve, wobei 20 ml Paste in den Messzylinder, der mit dem Rotor auf der Apparatur zusammengebaut wird, eingetragen werden.

2. Verfahren nach Anspruch 1, **dadurch gekennzeichnet, dass** die kohlenstoffhaltigen leitfähigen Füllstoffe Kohlenstoff-Nanoröhren, Kohlenstoff-Nanofasern, Ruß oder Graphen oder eine Mischung davon in beliebigen Anteilen, vorzugsweise gemäß einem chemischen Gasphasenabscheidungsverfahren erhaltene mehrwandige Kohlenstoff-Nanoröhren und gegebenenfalls Kohlenstoff-Nanofasern und/oder Ruß und/oder Graphen, umfassen.

3. Verfahren nach einem der Ansprüche 1 und 2, **dadurch gekennzeichnet, dass** das polymere Bindemittel aus der Gruppe bestehend aus Polysacchariden, modifizierten Polysacchariden, Polyethern, Polyestern, Acrylpolymeren, Polycarbonaten, Polyiminen, Polyamiden, Polyacrylamiden, Polyurethanen, Polyepoxiden, Polyphosphazenen, Polysulfonen, halogenierten Polymeren, Naturkautschuken, funktionalisierten oder nichtfunktionalisierten Elastomeren, insbesondere Elastomeren auf Basis von Styrol, Butadien und/oder Isopren, und Mischungen davon ausgewählt wird.

4. Verfahren nach Anspruch 3, **dadurch gekennzeichnet, dass** das polymere Bindemittel aus der Gruppe bestehend aus Fluorpolymeren, wie:
(i) denjenigen mit mindestens 50 Mol-% mindestens eines Monomers der Formel (I):
CFX₁=CX₂X₃ (I)
wobei E₁, X₂ und X₃ unabhängig für ein Wasserstoffatom oder Halogenatom (insbesondere ein Fluor- oder Chloratom) stehen, wie Polyvinylidenfluorid (PVDF), vorzugsweise in der α-Form, Polytrifluorethylen (PVF3), Polytetrafluorethylen (PTFE), Vinylidenfluorid-Copolymeren mit Hexafluorpropylen (HFP) oder Trifluorethylen (VF3) oder Tetrafluorethylen (TFE) oder Chlortrifluorethylen (CTFE), Fluorethylen/Propylen(FEP)-Copolymeren, Ethylen-Copolymeren mit Fluorethylen/Propylen (FEP) oder Tetrafluorethylen (TFE) oder Chlortrifluorethylen (CTFE);
(ii) denjenigen mit mindestens 50 Mol-% mindestens eines Monomers der Formel (II):
R-O-CH-CH₂ (II)
wobei R für einen perhalogenierten (insbesondere perfluorierten) Alkylrest steht, wie Perfluorpropylvinylether (PPVE), Perfluorethylvinylether (PEVE) und Copolymeren von Ethylen mit Perfluormethylvinylether (PMVE),
vorzugsweise PVDF,
ausgewählt wird.

5. Verfahren nach einem der Ansprüche 1 bis 4, **dadurch gekennzeichnet, dass** es sich bei dem Lösungsmittel um N-Methylpyrrolidon, Dimethylsulfoxid, Dimethylformamid, vorzugsweise N-Methylpyrrolidon, handelt.

6. Verfahren nach einem der Ansprüche 1 bis 5, **dadurch gekennzeichnet, dass** es sich bei dem polymeren Dispergiermittel um Poly(vinylpyrrolidon) handelt.

7. Verfahren nach einem der Ansprüche 1 bis 6, **dadurch gekennzeichnet, dass** es sich bei dem Kneter um eine Compoundierungsvorrichtung handelt, die aus einem gleichläufig oder gegenläufig drehenden Doppelschneckenextruder und einem Cokneter mit einem Rotor, der mit Flügeln ausgestattet ist, die zum Zusammenarbeiten mit an einem Stator angebrachten Zähnen geeignet sind, ausgewählt ist.

8. Verfahren nach einem der Ansprüche 1 bis 7, **dadurch gekennzeichnet, dass** außerdem zwischen den Schritten (ii) und (iii) ein Schritt des Formens von Granulat aus dem Masterbatch eingefügt wird.

9. Verfahren nach einem der Ansprüche 1 bis 8, **dadurch gekennzeichnet, dass** der Schritt (iii) in einem Kneter durchgeführt wird.

10. Verfahren nach einem der Ansprüche 1 bis 9, **dadurch gekennzeichnet, dass** der Verdünnungsgrad in Schritt (iii) zwischen 2:1 und 10:1, vorzugsweise zwischen 3:1 und 5:1, liegt.

11. Verwendung der gemäß dem Verfahren nach einem der Ansprüche 1 bis 10 erhaltenen pastösen Zusammensetzung zur Herstellung von leitfähigen dünnen Filmen, Tinten oder Beschichtungen, insbesondere zur Herstellung von Elektroden von Li-Ionen-Batterien oder Superkondensatoren, oder zuer Herstellung von leitfähigen Verbundwerkstoffen.

## Claims

1. Process for the preparation of a pasty composition based on carbon-based conductive fillers, comprising:
(i) the introduction into a kneader, and then the kneading, of carbon-based conductive fillers, of at least one polymeric binder, of at least one solvent and of at least one polymeric dispersant distinct from said binder, chosen from poly(vinylpyrrolidone), poly(phenylacetylene), poly(meta-phenylene vinylidene), polypyrrole, poly(para-phenylene benzobisoxazole), poly(vinyl alcohol) and their mixtures, in order to form a masterbatch comprising a proportion by weight of 15% to 40% of carbon-based conductive fillers and of 50% to 75% of solvent and in which the ratio by weight of the polymeric binder to the carbon-based conductive fillers is between 0.04 and 0.4 and the ratio by weight of the polymeric dispersant to the carbon-based conductive fillers is between 0.1 and 1, limits included;
(ii) the extrusion of said masterbatch in a solid form;
(iii) the diluting of said masterbatch in a solvent which is identical to or different from that of stage (i), in order to obtain a pasty composition exhibiting a viscosity of between 400 and 600mPa.s, determined for a gradient of 100 s⁻¹ and at a temperature of 23°C, from the viscosity curve measured by varying the shear gradient between 1.2 and 1032 s⁻¹ at 23°C, using a viscometer in which 20 ml of paste are introduced into the measurement cylinder, which is assembled with the rotor on the apparatus.

2. Process according to Claim 1, **characterized in that** the carbon-based conductive fillers comprise carbon nanotubes, carbon nanofibers, carbon black or graphene, or a mixture of these in any proportions, preferably multi-walled carbon nanotubes, obtained according to a chemical vapor deposition process, and optionally carbon nanofibers and/or carbon black and/or graphene.

3. Process according to either of Claims 1 and 2, **characterized in that** said polymeric binder is chosen from the group consisting of polysaccharides, modified polysaccharides, polyethers, polyesters, acrylic polymers, polycarbonates, polyimines, polyamides, polyacrylamides, polyurethanes, polyepoxides, polyphosphazenes, polysulfones, halogenated polymers, natural rubbers, functionalized or nonfunctionalized elastomers, in particular elastomers based on styrene, butadiene and/or isoprene, and their mixtures.

4. Process according to Claim 3, **characterized in that** the polymeric binder is chosen from the group consisting of fluoropolymers, such as:
(i) those comprising at least 50 mol% of at least one monomer of formula (I):
CFX₁=CX₂X₃ (I)
where X₁, X₂ and X₃ independently denote a hydrogen or halogen (in particular fluorine or chlorine) atom, such as poly(vinylidene fluoride) (PVDF), preferably in the α form, poly(trifluoroethylene) (PVF3), polytetrafluoroethylene (PTFE), copolymers of vinylidene fluoride with either hexafluoropropylene (HFP) or trifluoroethylene (VF3) or tetrafluoroethylene (TFE) or chlorotrifluoroethylene (CTFE), fluoroethylene/propylene (FEP) copolymers, or copolymers of ethylene with either fluoroethylene/propylene (FEP) or tetrafluoroethylene (TFE) or chlorotrifluoroethylene (CTFE);
(ii) those comprising at least 50 mol% of at least one monomer of formula (II):
R-O-CH-CH₂ (II)
where R denotes a perhalogenated (in particular perfluorinated) alkyl radical, such as perfluoropropyl vinyl ether (PPVE), perfluoroethyl vinyl ether (PEVE) and copolymers of ethylene with perfluoromethyl vinyl ether (PMVE),
preferably PVDF.

5. Process according to any one of Claims 1 to 4, **characterized in that** said solvent is N-methylpyrrolidone, dimethyl sulfoxide or dimethylformamide, preferably N-methylpyrrolidone.

6. Process according to any one of Claims 1 to 5, **characterized in that** the polymeric dispersant is poly(vinylpyrrolidone).

7. Process according to any one of Claims 1 to 6, **characterized in that** the kneader is a compounding device chosen from a corotating or counterrotating twin-screw extruder and a co-kneader comprising a rotor provided with flights appropriate for interacting with teeth fitted to a stator.

8. Process according to any one of Claims 1 to 7, **characterized in that** a stage of forming granules starting from the masterbatch is additionally included between stages (ii) and (iii).

9. Process according to any one of Claims 1 to 8, **characterized in that** stage (iii) is carried out in a kneader.

10. Process according to any one of Claims 1 to 9, **characterized in that** the degree of dilution in stage (iii) is between 2:1 and 10:1, preferably between 3:1 and 5:1.

11. Use of the pasty composition obtained according to the process according to any one of Claims 1 to 10, in the preparation of thin conductive films, conductive inks or conductive coatings, in particular in the manufacture of electrodes of Li-ion batteries or of supercapacitors, or in the preparation of conductive composite materials.
